# EUROPÄISCHE PATENTSCHRIFT

(11) **EP 0 446 586 B1**
(45) Veröffentlichungstag und Bekanntmachung des Hinweises auf die Patenterteilung: **12.06.1996**
(21) Anmeldenummer: 91101020.5
(22) Anmeldetag: 26.01.1991
(51) Int. Cl.: H04L 12/56

(54) **ATM-Vermittlungsstelle**
ATM-exchange
Central de commutation ATM

(30) Priorität: 14.03.1990 DE 4008080
(43) Veröffentlichungstag der Anmeldung: 18.09.1991
(73) Patentinhaber: Alcatel SEL Aktiengesellschaft, D-70435 Stuttgart (DE); ALCATEL N.V., NL-1077 XX Amsterdam (NL)
(72) Erfinder: Schrodi, Karl, W-7258 Heimsheim (DE); Ellenberger, Gert, Dr., W-7312 Kirchheim (DE); Pfeiffer, Bodo, W-7141 Schwieberdingen (DE); Cesar, Bozo, W-7000 Stuttgart 40 (DE)
(74) Vertreter: Brose, Gerhard

(56) Entgegenhaltungen:
- EP-A- 0 224 895
- EP-A- 0 320 714
- EP-A- 0 336 401
- PATENT ABSTRACTS OF JAPAN vol. 5, no. 011 (E-042)23. Januar 1981 & JP-A-55 140 347 ( OKI ELECTRIC IND CO LTD ) 1. November 1980
- PATENT ABSTRACTS OF JAPAN vol. 13, no. 53 (E-713)7. Februar 1989 & JP-A-63 246 055 ( NEC CORP ) 13. Oktober 1988
- PATENT ABSTRACTS OF JAPAN vol. 15, no. 258 (E-108)28. Juni 1991 & JP-A-3 082 243 ( NEC CORP ) 8. April 1991

## Beschreibung

Die Erfindung betrifft eine ATM-Vermittlungsstelle nach dem Oberbegriff des Hauptanspruchs.

Dies dürfte der übliche Aufbau vieler bisher bekanntgewordener ATM-Vermittlungsstellen sein. Hierzu wird verwiesen auf Abschnitt 3, Vermittlungsablauf, auf den Seiten 6 bis 9 eines Artikels von W. Schmidt in "Der Fernmelde=Ingenieur", Heft 9, September 1987. Dort wird der grundsätzliche Vermittlungsablauf bei ATM anhand einer so aufgebauten ATM-Vermittlungsstelle beschrieben.

Als Wegeinformation kommen sowohl Verbindungsnummern (Virtual Channel Identifiers, VCI) infrage, die in jedem Koppelelement anhand von Verbindungstabellen ausgewertet werden, als auch eine Reihe von Adressen (Routing Tag), mit denen die einzelnen Koppelelemente direkt gesteuert werden. Beispiele hierfür sind genügend bekannt.

Beim Aufbau einer Verbindung durch ein Koppelnetz wird der Weg aufgrund der augenblicklichen Koppelnetzauslastung gewählt und während der gesamten Verbindung beibehalten. Nun kommt es vor, daß alle für eine neue Verbindung infrage kommenden Wege bereits so stark belastet sind, daß die neue Verbindung nicht mehr angenommen werden kann. Oft ist in solchen Fällen aber für eine der bestehenden und die neue Verbindung verhindernden Verbindungen ein alternativer Weg durch das Koppelnetz möglich, der noch ausreichend belastbar ist. Dieses Problem ist auch von herkömmlichen Vermittlungsstellen her bekannt. Eine Beseitigung lokaler Blockierungen durch Umsortieren bestehender Verbindungen ist wegen dabei auftretender Störungen nicht zufriedenstellend gelöst.

Die ATM-Vermittlungsstelle gemäß der Lehre des Hauptanspruchs ist unempfindlich gegenüber Störungen beim Umsortieren bestehender Verbindungen.

Vorteilhafte Ausgestaltungen der Erfindung sind den Unteransprüchen zu entnehmen.

Die Erfindung beruht auf dem Grundgedanken, auch in solchen ATM-Vermittlungsstellen, die mit virtuellen Verbindungen arbeiten, dieselben Einrichtungen vorzusehen, die bei ATM-Vermittlungsstellen mit "verbindungslosen Verbindungen" die richtige Reihenfolge der Zellen am Ausgang gewährleisten.

Solche Einrichtungen zum Gewährleisten der richtigen Reihenfolge der Zellen am Ausgang einer ATM-Vermittlungsstelle sind an sich bekannt. Eine Einrichtung mit dieser Zielsetzung, wenn auch mit anderem Aufbau, ist bekannt aus: Patent Abstracts of Japan, Vol. 5, no. 011 (E-042) 23, Januar 1981. Dies ist eine Zusammenfassung der am 1. November 1980 veröffentlichten JP-A-55 140 347 der OKI Electric Ind Co Ltd.

Als "verbindungslose Verbindungen" werden solche Verbindungen angesehen, bei denen die einzelnen Zellen einer Verbindung nicht denselben Weg gehen, sondern auf alle möglichen Wege aufgeteilt werden. Dadurch tritt eine recht gleichmäßige Belastung ein; auf Verkehrsmessungen kann verzichtet werden, die dafür sonst erforderlichen Vorrichtungen sind nicht

erforderlich. Nach außen soll aber diese Funktionsweise nicht erkennbar sein. Nach außen sollen alle Verbindungen wie virtuelle Verbindungen wirken. Deshalb besteht die Notwendigkeit, am Ausgang auf die richtige Reihenfolge der Zellen zu achten, weil überholvorgänge im Innern nicht ausgeschlossen sind.

Nicht jede ATM-Vermittlungsstelle kann und soll mit "verbindungslosen Verbindungen" betrieben werden. Insbesondere, wenn die Vermittlungsstelle auch Verteildienste bearbeitet und die notwendigen Kopien im Koppelnetz erstellt, kommen, zumindest für die Verteildienste, nur virtuelle Verbindungen infrage. Gerade bei Verteildiensten ist es aber besonders wünschenswert, lokale Blockierungen durch Umsortieren bestehender Verbindungen auflösen zu können.

Ist an jedem Ausgang des Koppelnetzes eine Ausgangseinheit zum Wiederherstellen der richtigen Zellfolge vorhanden, so können virtuelle Verbindungen jederzeit störungsfrei an die augenblickliche Koppelnetzbelastung angepaßt werden.

Im folgenden wird die Erfindung anhand eines Ausführungsbeispiels unter Zuhilfenahme der beiliegenden Zeichnungen weiter erläutert.
- Fig. 1: zeigt ein grobes Blockschaltbild einer erfindungsgemäßen Vermittlungsstelle,
- Fig. 2: zeigt das Blockschaltbild einer Ausgangseinheit für die erfindungsgemäße Vermittlungsstelle,
- Fig. 3: zeigt eine Realisierungsmöglichkeit für den in der Ausgangseinheit nach Fig. 2 enthaltenen Pufferspeicher.

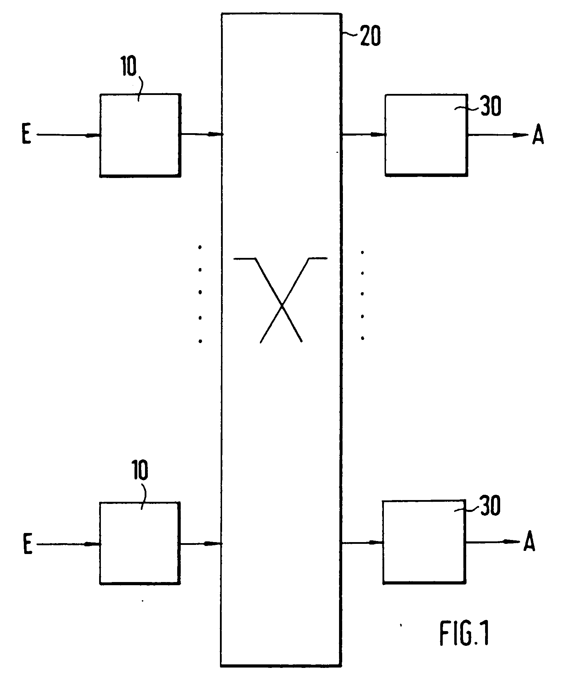

Wie Fig. 1 zeigt, weist eine erfindungsgemäße Vermittlungsstelle zunächst, wie jede andere Vermittlungsstelle, eine Mehrzahl von Eingängen E, eine Mehrzahl von Ausgängen A und ein Koppelnetzwerk 20 auf. Erfindungsgemäß ist zwischen das Koppelnetzwerk 20 und jeden Ausgang A eine Ausgangseinheit 30 eingefügt. Gemäß einer besonderen Ausgestaltung der Erfindung ist weiter zwischen jeden Eingang E und das Koppelnetzwerk 20 eine Eingangseinheit 10 eingefügt.

Zunächst ist zu bemerken, daß die meisten Vermittlungsstellen irgendwelche Arten von Eingangs- und Ausgangseinheiten aufweisen.

Jede Eingangseinheit 10 hat zunächst die Aufgabe, jeder zu vermittelnden Zelle eine Wegeinformation für einen bestimmten, verbindungsindividuellen Weg durch das Koppelnetz beizufügen. Daß und wie dies gemacht wird, ist bereits aus dem eingangs genannten Artikel in "Der Fernmelde=Ingenieur" grundsätzlich bekannt. Detaillösungen sind dem Fachmann zwischenzeitlich geläufig.

In diesem Artikel sind auf Seite 7, vorletzter Abschnitt, auch "Systeme, die mit Zeitmarken arbeiten" genannt. Bei diesen muß "die Ankunftszeit eines Pakets ermittelt und der Patektinformation am Eingang des Knotens hinzugefügt werden". Wenn diese Zeitmarken ausreichend fein auflösen, dann können sie auch verwendet werden, um die Reihenfolge der Zellen zu kennzeichnen. Auch wenn an sich keine Zeitmarken gebraucht werden, kann in gleicher Weise verfahren werden, um die Reihenfolge zu kennzeichnen. Es können aber auch in jeder Eingangseinheit unabhängige Modulo-N-Zähler verwendet werden, um diese Marken, im folgenden auch als Marken erster Art bezeichnet, zu vergeben. Da die richtige Reihenfolge nur zwischen den Zellen jeder einzelnen Verbindung gewährleistet sein muß, können die Verbindungsnummern, sofern solche vorhanden sind, als Ausscheidungskriterium mit verwendet werden, sie werden im folgenden als Marken zweiter Art bezeichnet. Die Marken erster Art können sowohl für die Zellen jeder einzelnen Verbindung getrennt als auch für die Zellen aller über eine Eingangseinheit geführten Verbindungen gemeinsam vergeben werden.

Weiter besteht grundsätzlich die Möglichkeit, daß im Koppelnetz zur Wegewahl und in den Ausgangseinheiten zur Festlegung der Reihenfolge solche Informationen ausgewertet werden, die die Zellen beim Eintritt in die Vermittlungsstelle bereits mit sich führen. Besondere Einrichtungen, hier Eingangseinheiten, sind in diesem Fall nicht erforderlich.

Als Koppelnetz 20 kommt hier jedes Koppelnetz infrage, bei dem alle Zellen derselben Verbindung einen bestimmten, verbindungsindividuellen Weg gehen.

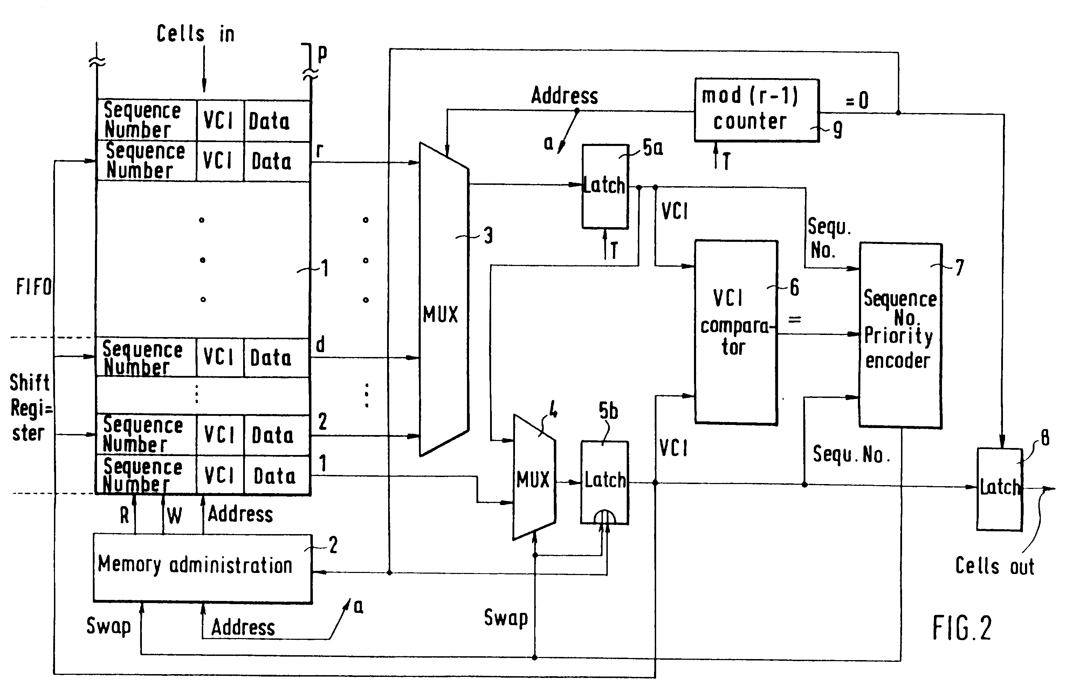

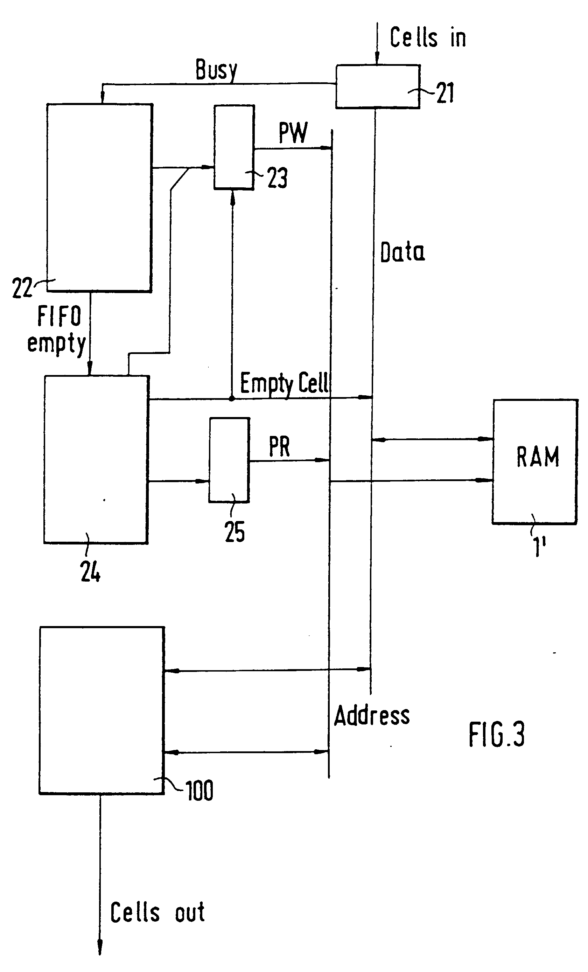

Anhand der Fig. 2 und 3 wird ein Ausführungsbeispiel für eine Ausgangseinheit 30 beschrieben.

Der Grundgedanke dieses Ausführungsbeispiels liegt darin, jede Zelle am Ausgang solange anzuhalten, bis sichergestellt ist, daß keine ältere Zelle mehr unterwegs zwischengespeichert sein kann. Vor der Weitergabe der Zelle wird geprüft, ob unter den später am Ausgang angekommenen Zellen noch eine Zelle ist, die vorher auszugeben ist.

Dies wird vorzugsweise dadurch realisiert, daß ausgangsseitig ein Pufferspeicher vorhanden ist, der mindestens teilweise schieberegisterartig betrieben wird und dadurch eine vorgegebene Verzögerung bewirkt. Vor Ausgabe einer Zelle wird mindestens der schieberegisterartig betriebene Teil des Pufferspeichers daraufhin untersucht, ob eine später eingeschriebene Zelle früher auszugeben ist. Wenn ja, werden die beiden Zellen vertauscht.

In diesem Ausführungsbeispiel einer Ausgangseinheit wird ein Datenstrom angenommen, der auf Zellbreite parallelisiert ist, bei dem also alle Bits einer Zelle gleichzeitig auf parallelen Leitungen weitergegeben werden. Dies ist in der Regel weder gegeben noch besonders vorteilhaft. Einerseits ist es aber immer möglich, durch Serien-Parallel-Wandler, Parallel-Serien-Wandler und Pufferspeicher einen solchen Datenstrom herzustellen, andererseits liegt es im Bereich fachmännischen Handelns, das vorliegende Ausführungsbeispiel an ein konkret vorgegebenes Datenformat, wie es beispielsweise im Innern einer ATM-Vermittlungsstelle verwendet wird, anzupassen. Dabei wird es dann auch vorteilhaft oder gar notwendig sein, nicht die Zellen selbst im Pufferspeicher zu speichern, sondern nur die Angaben, die zum Umsortieren und zum Wiederauffinden der in einem separaten Speicher abgespeicherten Zellen notwendig sind. Der Umgang mit indirekter Adressierung ist für jeden Fachmann geläufig.

Sie kann auch im gezeigten Beispiel ohne weiteres verwendet werden, wobei dann anstelle der Daten jeweils die Adresse gespeichert wird, unter der die Daten tatsächlich abgespeichert sind.

Die in Fig. 2 dargestellte Ausgangseinheit weist einen Pufferspeicher 1, eine Speicherverwaltungseinheit 2, zwei Multiplexer 3 und 4, zwei Zwischenspeicher 5a und 5b, zwei Vergleicher 6 und 7, einen weiteren Zwischenspeicher 8 und einen Zähler 9 auf.

Der Pufferspeicher 1 weist p Speicherplätze auf. Jeder Speicherplatz ist für die Aufnahme einer vollständigen Zelle vorgesehen. Für die vorliegende Ausgangseinheit von Bedeutung und deshalb in Fig. 1 besonders ausgewiesen ist pro Zelle eine Marke erster Art, Sequence Number, eine Marke zweiter Art, VCI (= Virtuel Circuit Identifier) und der Rest der Zelle, Data. Die Darstellung in Fig. 2 gibt den tatsächlichen Speicherplatzbedarf für die einzelnen Teile nicht richtig wieder.

Bevorzugt wird zur Vergabe der Marken erster Art ein Modulo-N-Zähler benutzt, wobei N so groß zu wählen ist, daß innerhalb einer vorgegebenen Zeit weniger als N/2 Zahlen als Marken erster Art vergeben werden. Wegen des periodischen Auftretens aller Zahlen muß nach beiden Richtungen ein ausreichend großer Abstand bestehen, um Eindeutigkeit zu erhalten. Mit der angegebenen Wahl von N können alle Zellen eindeutig in ihrer ursprünglichen Reihenfolge rekonstruiert werden, die bei der Vergabe der Nummern nicht weiter als die genannte vorgegebene Zeit auseinanderliegen. Diese Zeit muß dann zweckmäßigerweise so vorgegeben sein, daß, abgesehen von der zugelassenen Fehlerquote, sichergestellt ist, daß jede Zelle innerhalb dieser Zeit die letzten r Speicherplätze des Pufferspeichers 1 durchläuft. Als grober Anhaltspunkt für die vorzugebende Zeit kann das Doppelte der Differenz zwischen maximaler und minimaler Laufzeit zwischen Vergabe der Marken erster Art und der Ankunft in der Ausgangseinheit angenommen werden.

Die Marke zweiter Art, VCI, kennzeichnet die Zugehörigkeit einer Zelle zu einer bestimmten virtuellen Verbindung.

Statt des Rests der Zelle, Data, kann im Pufferspeicher 1 auch die Adresse abgespeichert werden, unter der dieser Rest in einem anderen Speicher abgespeichert ist.

Der Pufferspeicher 1 ist in drei Teile untergliedert, nämlich einen schieberegisterartigen Teil, Shift Register, mit den Speicherplätzen 1 bis d und einen nach Art eines FIFO-Speichers betriebenen Teil, FIFO, der wieder aus zwei Teilen mit den Speicherplätzen d+1 bis r und r+1 bis p zusammengesetzt ist. Zumindest auf die Speicherplätze 1 bis r muß dabei einzeln derart zugegriffen werden können, daß ihr Inhalt gelesen werden kann oder daß in sie ein neuer Inhalt eingeschrieben werden kann.

Die Dimensionierung des Pufferspeichers, d.h. die Wahl der Zahlenwerte für d, r und p, muß im konkreten Anwendungsfall erfolgen. Berücksichtigt werden muß dabei vor allem die zulässige Fehlerrate, die minimale und maximale Laufzeit einer Zelle seit dem ersten Verzweigungspunkt, die Anzahl der gleichzeitig über eine Ausgangseinheit zugelassenen Verbindungen, die für eine Verbindung zugelassene minimale und maximale Zahl von Zellen pro Zeiteinheit und deren zulässige Schwankungsbreite. Für einen typischen Anwendungsfall ergab eine Simulation Werte von d = 10, r = 34 und p = 330. Diese Werte können als grobe Anhaltspunkte auch für andere Fälle angesehen werden. Um im Einzelfall zu optimieren, sind Einzelfalluntersuchungen unumgänglich. Die Wahl des Wertebereichs für die Marken erster Art, Sequence Number, ist davon abhängig. Für die oben genannten Zahlenwerte und die verbindungsindividuelle Vergabe dieser Marken kann N = 512 als Anhaltspunkt gelten.

Am Eingang der Ausgangseinheit ankommende Zellen, "Cells in", werden zunächst darauf untersucht, ob es am Ausgang auszugebende Zellen sind oder solche, die in der Ausgangseinheit enden. Dies sind einerseits Leerzellen, andererseits solche, die Steuersignale für die Ausgangseinheit (oder eine in der Regel damit verbundene Eingangseinheit, die anders nicht erreichbar ist) enthalten. Die auszugebenden Zellen werden in den Pufferspeicher 1 eingegeben und zwar derart, daß sie zunächst im dem nach Art eines FIFO-Speichers betriebenen Teil bis auf den untersten freien Speicherplatz "durchfallen". Immer, wenn am Ausgang eine Zelle ausgegeben wird, rücken im Pufferspeicher alle Zellen um einen Speicherplatz nach unten. Ist der letzte Speicherplatz des FIFO-Speichers, d+1, belegt, dann wird die darin enthaltene Zelle in den ersten Speicherplatz des Schieberegisters, d, übernommen. Ist der Speicherplatz d+1 leer, dann muß eine Leerzelle in den Speicherplatz d eingeschrieben werden. Die Aufenthaltsdauer jeder Zelle kann damit, zumindest relativ zu jeder anderen Zelle, aus ihrer Position im Pufferspeicher 1 abgeleitet werden. Die Ausgabe aus dem Pufferspeicher 1 wird unten beschrieben werden.

Die Speicherverwaltungseinheit 2 ist in Fig. 2 nur sehr schematisch dargestellt. Sie hat zunächst die Aufgabe, den bereits beschriebenen normalen Betrieb des Pufferspeichers 1 zu gewährleisten. Dies erfolgt durch Anlegen von Adressen, Address, Schreibbefehlen, W, und Lesebefehlen, R. Außerdem ist, in Fig. 2 nicht dargestellt, eine Information über das Vorhandensein oder Nichtvorhandensein einer einzuschreibenden Zelle erforderlich. Weiter hat die Speicherverwaltungseinheit 2 die Aufgabe, den Inhalt des vom Zähler 9 adressierten Speicherplatzes, Address, gegen den Inhalt des Zwischenspeichers 5b zu tauschen, wenn hierzu ein Befehl, Swap, gegeben wird.

Durch den Multiplexer 3 kann wahlweise auf den Inhalt eines der Speicherplätze 2 bis r des Pufferspeichers 1 zugegriffen und in den Zwischenspeicher 5a weitergegeben werden. Die Auswahl des Speicherplatzes erfolgt durch den Zähler 9, Address.

Durch den Multiplexer 4 wird am Anfang eines Ausgabezyklus der Inhalt des Speicherplatzes 1 des Pufferspeichers 1 in den Pufferspeicher 5b übertragen. Dies ist der Fall, wenn der Zähler 9 zurückgesetzt wird, "=0". Durch einen besonderen Befehl, Swap, wird mittels des Multiplexers 4 der Inhalt des Zwischenspeichers 5a in den Zwischenspeicher 5b übernommen. Daß mittels desselben Befehls, Swap, in den Pufferspeicher 5b eingeschrieben und aus diesem ausgelesen wird, ist nichts ungewöhnliches und kann vom Fachmann durch übliche Maßnahmen berücksichtigt werden.

Durch den Vergleicher 6 werden die Marken zweiter Art, VCI, derjenigen beiden Zellen miteinander verglichen, die gerade in den Zwischenspeichern 5a und 5b gespeichert sind. Nur bei Gleichheit der beiden Marken zweiter Art, d.h. wenn die beiden Zellen derselben Verbindung angehören, wird der nachfolgende Vergleicher aktiviert.

Der Vergleicher 7 vergleicht die Marken erster Art, Sequence Number, der beiden in den Zwischenspeichern 5a und 5b enthaltenen Zellen. Zeigt der Vergleicher 6 an, daß beide Zellen derselben Verbindung angehören und wird festgestellt, daß die im Zwischenspeicher 5a enthaltene Zelle älter ist als die im Zwischenspeicher 5b enthaltene, so wird ein Befehl, Swap, abgegeben, durch den die ältere Zelle in den Zwischenspeicher 5b und die jüngere Zelle an deren Platz im Pufferspeicher 1 übernommen werden. Im Ergebnis werden damit die beiden Zellen vertauscht.

Der Zähler 9 sorgt für den richtigen zeitlichen Ablauf. Er zählt, mit einem vorgegebenen Takt T, periodisch von 2 bis r. Wird der Zähler 9 beim Zählerstand r zurückgesetzt, "=0", so wird ein Ausgabezyklus abgeschlossen und der nächste begonnen. Der Inhalt des Zwischenspeichers 5b, der im vorangegangenen Zyklus als die älteste zu einer bestimmten Verbindung gehörige Zelle erkannt wurde, wird in den Zwischenspeicher 8 übernommen und steht an dessen Ausgang, Cells out, zur Ausgabe zur Verfügung. Gleichzeitig wird der Inhalt des Speicherplatzes 1 des Pufferspeichers 1 über den Multiplexer 4 in den zwischenspeicher 5b übernommen. Anschließend werden der Reihe nach die Speicherplätze 2 bis r auf ältere Zellen (Marken erster Art) derselben Verbindung (Marken zweiter Art) untersucht. Dazu wird der Inhalt jeweils über den Multiplexer 3 in den Zwischenspeicher 5a übernommen und mittels der Vergleicher 6 und 7 verglichen. Durch die oben beschriebenen Tauschaktionen, Swap, ist sichergestellt, daß beim Zählerstand r des Zählers 9 tatsächlich die älteste Zelle der betrachteten Verbindung im Zwischenspeicher 5b gespeichert ist und daß alle jüngeren Zellen dieser Verbindung noch oder wieder im Pufferspeicher 1 enthalten sind.

Die in Fig. 2 gewählte Darstellung der Ausgangseinheit zeigt vor allem die Funktionsweise der Ausgangseinheit. Der Aufbau und die Verwaltung des Pufferspeichers mit einem nach Art eines FIFO-Speichers betriebenen Teil und einem schieberegisterartig betriebenen Teil kommt deutlich in der in Fig. 3 gewählten Darstellung zum Ausdruck. Die Verteilung der Takte, einschließlich der Schreib- und Lesebefehle, ist hier nicht mit dargestellt.

Der Pufferspeicher ist durch einen Schreib-Lese-Speicher (RAM), 1', realisiert. Die ankommenden Zellen werden über einen Eingangsspeicher 21 auf einen Datenbus, Data, gegeben, an dem auch der Schreib-Lese-Speicher 1' angeschlossen ist. Eine Einschreibsteuerung 22 wird vom Eingangsspeicher 21 aktiviert, Busy, wenn eine einzuschreibende Zelle anliegt. Über den Einschreibzähler 23 wird eine Adresse PW über einen Adressbus, Address, an den Schreib-Lese-Speicher 1' angelegt und die Zelle in diesen eingeschrieben. Anschließend wird der Einschreibezähler 23 von der Einschreibsteuerung 22 aus inkrementiert. Eine Auslesesteuerung 24 gibt über einen Auslesezähler 25 die Adresse, PR, an, die dem Speicherplatz 1 entspricht.

Nach jeder Ausgabe einer Zelle wird der Auslesezähler 25 von der Auslesesteuerung 24 aus inkrementiert. Der Unterschied zwischen dem Inhalt PW des Einschreibzählers 23 und dem Inhalt PR des Auslesezählers 25 muß immer mindestens gleich d sein. Dies wird von der Einschreibsteuerung 22 überwacht und gegebenenfalls, FIFO empty, an die Auslesesteuerung 24 gemeldet, die dann an den Datenbus, Data, eine Leerzelle, Empty Cell, anlegt und das Einschreiben in den durch den Einschreibzähler 23 angegebenen Speicherplatz veranlaßt und anschließend den Einschreibzähler 23 inkrementiert.

Der Rest der Ausgangseinheit ist hier durch eine Zugriffs-, Vergleicher- und Ausgabeeinheit 100 dargestellt.

Beispiele für mögliche weitere Abwandlungen der Ausgangseinheit sind:

Bei der Suche nach der ältesten Zelle einer Verbindung muß nicht während des Suchvorgangs mehrmals eine relativ ältere Zelle gegen die eigentlich zur Ausgabe vorgesehene Zelle vertauscht werden. Es genügt, den ganzen vorgesehenen Speicherbereich durchzusuchen und sich nur Lage und Alter der jeweils ältesten gefundenen Zelle zu merken und dann am Ende des Suchvorgangs nur einmal zu tauschen.

Es ist auch möglich, überhaupt nicht zu tauschen und nur die älteste gefundene Zelle bei der Ausgabe vorzuziehen.

Der schieberegisterartig betriebene Teil des Pufferspeichers muß nicht zwingend dessen Ende bilden. Er kann auch am Anfang oder in der Mitte des Pufferspeichers liegen.

Folgende Überlegungen können auch zu gänzlich andersartigen Ausgangseinheiten führen:

Typische Beispiele für Verteildienste sind Konferenzschaltungen und Ton- oder Fernseh-Rundfunksendungen. Die zugehörigen Zellen repräsentieren einen kontinuierlichen Signalstrom. Sie entstehen beim Sender in konstanten Abständen und werden beim Empfänger nicht nur in der richtigen Reihenfolge, sondern auch wieder in den ursprünglichen konstanten Abständen benötigt.

Die regelmäßige Wiederherstellung konstanter Abstände ist nicht nur technisch aufwendig, sie setzt auch eine unterschiedliche Behandlung von Zellen unterschiedlicher Herkunft voraus. Einfacher ist es, für alle Zellen eine gleiche Verzögerung anzustreben. Ausgangseinheiten, die für alle Zellen die gleiche Verzögerung gewährleisten, stellen bei Zellen derselben Verbindung zwangsweise auch die richtige Reihenfolge sicher.

Wenn auch eine exakt gleiche Verzögerung aller Zellen bei ATM grundsätzlich nicht gewährleistet werden kann, so ist es doch möglich, in den Ausgangseinheiten die Zellen nach darin enthaltenen Zeitmarken zu sortieren und dann der Reihe nach auszugeben, wenn aufgrund der Zeitmarke die vorgesehene Verzögerung erreicht ist. Dies setzt eine entsprechend genaue Zeitverteilung an alle Eingangs- und Ausgangseinheiten voraus.

Für ATM ist es grundsätzlich, und nicht nur für Verteildienste, von Vorteil, gleiche Laufzeiten für alle Zellen einer Verbindung anzustreben, d.h., den "delay jitter" auszugleichen. Wird dies, wie soeben angedeutet, mit der Wiederherstellung der richtigen Reihenfolge kombiniert, so steht der hierfür erforderliche Aufwand in recht gutem Verhältnis zum damit erreichten Nutzen.

## Patentansprüche

1. ATM-Vermittlungsstelle mit einer Mehrzahl von Eingängen (E), einer Mehrzahl von Ausgängen (A) und einem Koppelnetz (20), durch das jede zu vermittelnde Zelle anhand einer Wegeinformation (VCI) auf einem bestimmten, verbindungsindividuellen Weg geführt wird,
**dadurch gekennzeichnet**, daß zwischen dem Koppel netz (20) und jedem Ausgang (A) eine Ausgangseinheit (30) mit einem Pufferspeicher (1, 1') zum Puffern auszugebender Zellen vorgesehen ist, daß Mittel vorhanden sind, um jede Zelle nach dem Verlassen des Koppelnetzes (20) in den Pufferspeicher (1, 1') der jeweiligen Ausgangseinheit (30) einzuschreiben und die Reihenfolge der Ausgabe der Zellen aus dem Pufferspeicher (1, 1') anhand von Marken zur Kennzeichnung der Reihenfolge (Sequence Number) zu bestimmen.

2. Vermittlungsstelle nach Anspruch 1, dadurch gekennzeichnet, daß zwischen jedem Eingang (E) der Vermittlungsstelle und dem Koppelnetz (20) eine Eingangseinheit (10) vorgesehen ist, in der jeder Zelle eine Wegeinformation (VCI) beigefügt wird.

3. Vermittlungsstelle nach Anspruch 1, dadurch gekennzeichnet, daß zwischen jedem Eingang (E) der Vermittlungsstelle und dem Koppelnetz (20) eine Eingangseinheit (10) vorgesehen ist, in der jeder Zelle eine Marke zur Kennzeichnung der Reihenfolge (Sequence Number) beigefügt wird.

## Claims

1. An ATM exchange having a plurality of inputs (E), a plurality of outputs (A), and a switching network (20) through which each cell to be switched is routed along a given, connection oriented path with the aid of path information (VCI),
**characterized in** that between the switching network (20) and each of the outputs (A), an output unit (30) is provided which includes a buffer (1, 1') for buffering cells to be outputted, that means are provided for writing each cell having left the switching network (20) into the buffer (1, 1') of the respective output unit (30) and for determining the order of output of the cells from the buffer (1, 1') with the aid of labels identifying the order (Sequence Number).

2. An exchange as claimed in claim 1, characterized in that between each input (E) of the exchange and the switching network (20), an input unit (10) is provided in which path information (VCI) is added to each cell.

3. An exchange as claimed in claim 1, characterized in that between each input (E) of the exchange and the switching network (20), an input unit (10) is provided in which a label identifying the order (Sequence Number) is added to each cell.

## Revendications

1. Centrale de commutation ATM comportant une pluralité d'entrées (E), une pluralité de sorties (A) et un réseau de couplage (20), à travers lequel chaque cellule à commuter est guidée à partir d'une information de cheminement (VCI) sur un chemin déterminé, à connexion individuelle, caractérisée en ce que, entre le réseau de couplage (20) et chaque sortie, (A) une unité de sortie (30) comportant une mémoire-tampon (1, 1') est prévue pour mettre en mémoire-tampon des cellules à sortir, en ce que des moyens sont présents pour écrire chaque cellule dans la mémoire-tampon (1, 1') de l'unité de sortie (30) respective, après qu'elle a quitté le réseau de couplage (20) et pour déterminer la séquence de sortie des cellules depuis la mémoire-tampon (1, 1') au moyen de repères destinés à l'identification de la séquence (Sequence number).

2. Centrale de commutation selon la revendication 1, caractérisée en ce que, entre chaque entrée (E) de la centrale de commutation et le réseau de couplage (20), est prévue une unité d'entrée (10), dans laquelle une information de cheminement (VCI) est ajoutée à chaque cellule.

3. Centrale de commutation selon la revendication 1, caractérisée en ce que, entre chaque entrée (E) de la centrale de commutation et le réseau de couplage (20), est prévue une unité d'entrée (10), dans laquelle un repère, destiné à l'identification de la séquence (Sequence Number) est ajouté à chaque cellule.
